# EUROPEAN PATENT SPECIFICATION

(11) **EP 2 316 762 B1**
(45) Date of publication and mention of the grant of the patent: **23.05.2012**
(21) Application number: 10188642.2
(22) Date of filing: 25.10.2010
(51) Int. Cl.: B65G 57/06, B65G 57/24

(54) **Apparatus and method for handling groups of objects in a palletising plant**
Vorrichtung und Verfahren zum Handhaben von Gegenstandsgruppen in einer Palettieranlage
Appareil et procédé pour manipuler des groupes d'objets dans une installation de palettisation

(30) Priority: 03.11.2009 IT RE20090107
(43) Date of publication of application: 04.05.2011
(73) Proprietor: Zecchetti S.R.L., 42027 Montecchio Emilia (Reggio Emilia) (IT)
(72) Inventor: Giovanelli, Mauro, 42027, MONTECCHIO EMILIA (REGGIO EMILIA) (IT); Rocchetta, Paolo, 42027, MONTECCHIO EMILIA (REGGIO EMILIA) (IT)
(74) Representative: Corradini, Corrado

(56) References cited:
- EP-A2- 1 724 219
- WO-A1-99/40000
- WO-A1-2006/126043
- WO-A1-2007/062778

## Description

This invention concerns a plant for palletising objects.

In many traditional plants for palletising relatively small objects (for example bottles, phials, jars, or other relatively small objects), operations include first forming groups of objects, and then transferring each group of objects one at a time onto a pallet base, piling the objects in an ordered fashion one on top of another by means of a handling head activated by drive means of various types, typically by a robot.

The invention specifically concerns the apparatus and the method for handling groups of objects.

For this purpose, an apparatus is known which comprises a belt conveyor, a conveyor branch of which exhibits a final tract defining a rest surface for a group of objects; and a handling head exhibiting a flexible support plane, which slides along guides provided on the handling head, a forward end of the flexible support plane sliding horizontally below the layer of objects, thus forming a support plate for the group of objects.

A solution of this type is illustrated in document EP 1724219, in which the palletising head comprises a frame, the frame being provided with an upper support having a lower opening to which a slatted mobile plane is associated for supporting the articles, which plane is capable, by sliding on guide rails, of passing from a vertical lateral position to a position in which it closes the horizontal lower base of the head. After the head, in which the mobile support plane is in a lateral position, has been positioned over the final tract of the belt transporter, thus surrounding the group of objects, the group of objects is gripped by horizontal and longitudinal pusher means borne by the head, and the head is translated horizontally in the advancement direction of the transporter, such as to drag the layer of objects away from the belt. As the layer of objects gradually leaves the belt, the slatted mobile plane is made to slide such as to be brought below the objects. The activation speed of the slatted plane must be the same as the speed of translation of the head, in such a way as to transfer the products from the plane of the belt to the slatted mobile plane.

Once the whole layer is supported by the mobile plane, the head is brought above the pallet, where the layer of objects is unloaded by moving the slatted mobile plane again in such a way that it withdraws its support from the objects. A drawback with this type of apparatus is that the transfer cycle requires moving the head along the longitudinal axis of the conveyor and this fact limits the lay-out possibilities of the plant. In fact if a two-axis (horizontal - longitudinal and vertical) handling system is used, the deposit zone for the layer must necessarily be situated on the same longitudinal axis as the transporter; to enable the use of other lay-outs, 4-axis robotic collection systems must necessarily be used.

Further, bulk-related problems can be caused by the fact that the apparatus requires a space at the head of the end of the conveyor for receiving the head after the head has loaded the layer of objects.

Another drawback is that because of the head's relatively heaviness, and of the head's projecting connection to the robot, translations of the head are inevitably accompanied by significant vibrations, to the point of compromising transfer operations, especially when the objects in question are sufficiently unstable because of their intrinsic shape. In such cases it would be necessary to make the structure more rigid and complex in order to stabilise the structure, discouraging in this way the use of a thus-designed apparatus to transfer objects.

An aim of the invention is to obviate this drawback by means of an apparatus and a method which intrinsically give rise to safe and stable movements.

In particular, an important main aim of the invention is to enable any type of 2-axis transfer system (horizontal and vertical or rotating and vertical) to be used, without thereby giving rise to lay-out limitations.

The abovementioned and other aims are achieved by the invention as it is characterised in the claims herein below.

The invention is disclosed in the following detailed description, with the aid of the appended figures of the drawings which illustrate a preferred embodiment thereof, provided by way of a non-limiting example, in which:

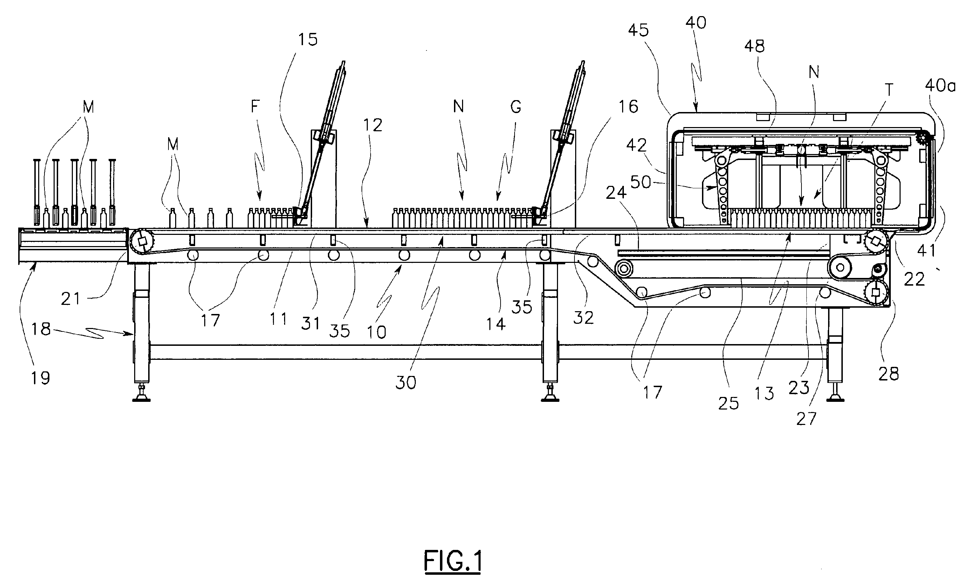

figure 1 is a section view along a longitudinal vertical plane of the apparatus of the invention;
figure 2 is an enlarged detail of figure 1;

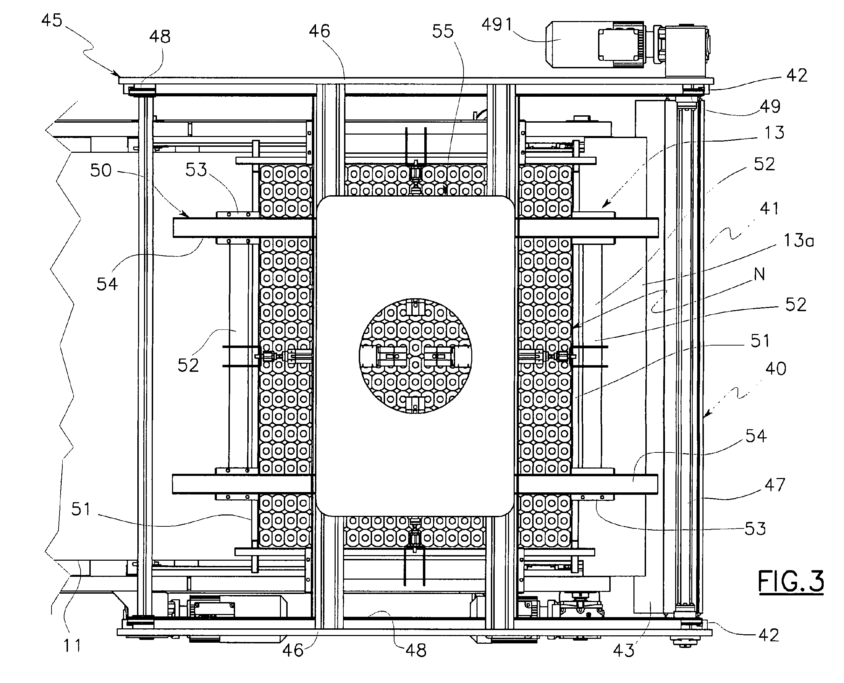

figure 3 is a plan view from above of figure 2;
figures 4A and 4B show a same detail of figure 2, in two different stages of the transfer of the group of objects to the handling head;
figure 5 is an enlarged detail of figure 2;
figure 5A is an enlarged detail of figure 5.

The apparatus of the invention comprises a unidirectional mobile belt conveyor 10, comprising a flexible transport belt 11 which is supported by a support frame 18, an upper branch of which transport belt 11 defines the transport branch 12, moving in a horizontal direction; the transport branch 12 exhibits a final tract 13 that is situated at the end of the branch 12 and defines a rest surface capable of supporting a group N of objects.

In detail, the objects shown as an example in the figures are bottles; the invention can however concern the handling of numerous other types of different objects.

In particular, in the embodiment shown in the figures, other transport means 19 are arranged upstream of the conveyor 10 which are capable of transferring a plurality of transverse rows of objects M side-by-side to the upstream end of the transport branch 12. The rows are then transferred to the belt 11, and after advancement of the belt, encounter first stop means 15 which temporarily block the group M and give rise, thanks to the advancement of the belt 11 which continues while the objects M are stopped, to a blocking station F where the objects M accumulate until a layer N is formed. Downstream of the first station F a second station G, which is formed by second stop means 16, is possibly (but not necessarily) arranged, where the group N waits temporarily after having been released by the previous stop means 15. Subsequently the group N is transferred, by advancement of the belt 11, to the final tract 13 of the transport branch, where the transfer station T is arranged, which transfers the group N of objects to a handling head 40.

Below the transport branch 12 a long rigid base 30 is arranged in contact with the overlying belt 11, thus stiffening the entire rest plane defined by the belt 11 for the objects; the base 30 is telescopic in order to follow the variations in length of the branch 12, as is more fully described herein below.

In particular, the base 30 comprises a fixed upstream portion 31 which involves the initial part of the branch 12 and the stations F and G, and a downstream portion 32, which involves the whole tract 13. Each of the two portions 31 and 32 is formed by a plurality of relatively long and slender parallel (tubular) rods which are arranged longitudinally and at a short distance from each other, in such a way as to define a corresponding number of corridors. The rods of the two portions 31 and 32 are transversely staggered in such a way that the rods of the first portion 31 can penetrate, more or less snugly, into the corridors of the second portion 32 and vice versa. When the length of the transport branch 12 diminishes, the rods of the downstream portion 32 penetrate into the corridors of the upstream portion 31, while contrarily when the length increases, they withdraw from the corridors. In any case the entire length of the tract 13 remains supported by the base 30, which stiffens the rest plane defined by the belt 11.

The transport branch 12 extends between an initial end roller 21 and a final end roller 22, around both of which the belt 11 is partially wound. The end 13a of the final tract 13 is defined by the rotating roller 22.

The return branch 14, which is supported by idle rollers 17, advances beneath the transport branch 12.

The apparatus further comprises a handling head 40 comprising a flexible and mobile support plane 41 such as a belt moving on guides 42 fixed to the support structure 45 of the head 40, the plane 41 advancing horizontally below the group N of objects until it forms a rigid support plate for the group N.

The support structure 45 is attached to handling means, of a known type and not shown in the figures, for example a robot or other means capable of moving the head 40 vertically and horizontally, both in order to collect groups of objects N from the station T, as better shown herein below, and subsequently to subject the groups N to successive operational stages, for example to arrange them in piles on pallets.

Preferably, the support structure 45 has the form of an open box; in particular, its lower base is open.

In more detail, in the embodiment shown in the figures, the support structure 45 is substantially constituted by two rectangularly-shaped frames 46. The frames 46, which are arranged on vertical planes which are parallel to the (longitudinal) direction of advancement of the transport branch 12, are joined together by horizontal transverse stiffening crossbars 47.

The guides 42 of the support plane 41 are arranged along the perimetral edges of the two vertical frames 46, in particular the vertical edge which is furthest downstream, and along the lower horizontal edge.

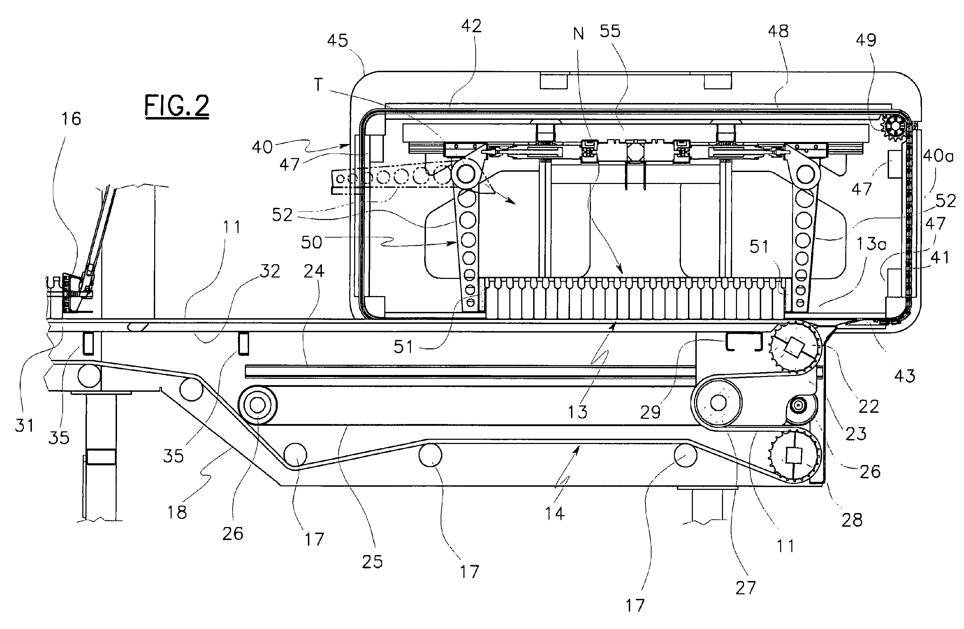

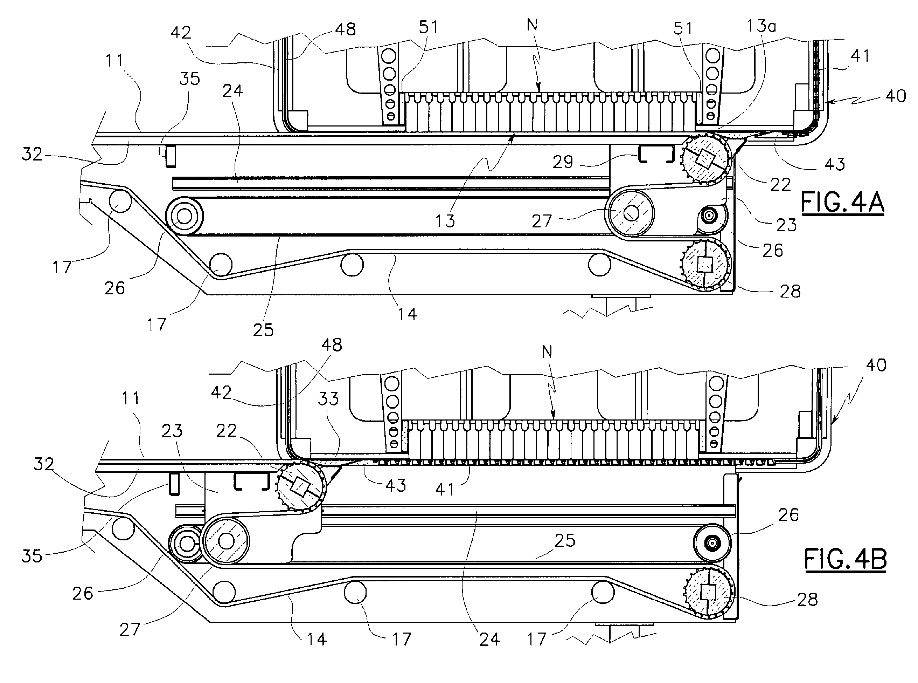

Typically, the support plane 41 has the form of a shutter, i.e. it is formed by rigid transverse strips which are arranged parallel in succession and joined together by hinges. The flexible lateral edges of the support plane 41 slide within the two guides 42 which are situated on the two frames 46. The support plane 41 is made to slide by two flexible transmission organs, in particular transmission chains 48, each of which is wound around four cogged wheels 49, of which at least a wheel 49 is motorised by a motor 491, the wheels 49 being arranged at the corners of the rectangular trajectory of the plane 41 (sliding curved guides can be provided instead of the idle wheels 49). The chains 48 are connected to the two ends of the plane 41 and, when driven by the toothed wheels 49, move the plane 41 along the guides 42, between a rest position, in which the plane is arranged almost entirely on two vertical sides of the guides 42, which are situated on the vertical surface 40a of the head 40 further downstream (see figures 2 and 4A) and the lower base of the support structure 45 therefore remains open; and an operating position, in which the plane 41 is extended entirely on the lower horizontal sides of the guides 42, thus defining a flat horizontal sheet which can support a group of objects (see figure 4B).

The handling head 40 comprises vice means 50 to retain the group of objects N with respect to the longitudinal direction. In particular it comprises a pair of transverse barriers 51, which are oppositely positioned and mobile in a longitudinal direction and grip the group of objects N arranged in the lower part of the head, in the said longitudinal direction. In the embodiment illustrated in the figures, the barriers 51 are attached to the lower ends of pairs of vertical arms 52 which are borne by carriages 53 sliding on rails 54 and activated by jacks 56, which are supported by a drive structure 55 arranged in the upper part of the head 40, above the group of objects N.

Preferably, the upstream barrier 51 is borne by a pair of arms 52 which can swing upwardly and toward the outside of the head 40 (as shown by a broken line in figure 2), in such a way as to allow the group N of objects to advance on the belt 11, the head 40 already being positioned at the zone of the belt 11 corresponding to the station T. After the entire group N has passed below the upstream barrier 51, the barrier 51 is lowered to a closed position (as shown with a continuous line in figure 2), in such a way as to grip the group N which is situated in the station T.

Advantageously, vice means can be provided to retain the group of objects N with respect to the transverse direction.

In the invention, the end 13a of the final tract 13 of the belt is mobile in a horizontal direction between an advanced position, in which the final tract constitutes a rest surface for the group of objects (see figures 2 and 4A), and a retracted position, in which the rest surface disappears (see figure 4B).

In the stage in which the end 13a of the final tract 13 of belt is shifted from the advanced position to the retracted position, the contemporaneous and synchronous advancement of the support plane 41 takes place below the group N of objects, while the forward end 43 of the support plane 41 is arranged adjacently to the end 13a of the final tract.

Preferably, the transverse rotating roller 22, on which the belt 11 is at least partially wound and which defines the downstream end of the transport branch 12, is supported by a mobile carriage 23 which can move to and fro in a longitudinal direction (i.e. the advancement direction of the belt 11).

More in detail, the carriage 23 slides on horizontal rails 24 which are arranged laterally with respect to the belt 11, and is driven in horizontal reciprocating motion by a transmission belt 25, the belt 25 being connected to the carriage 23 and ring-wound around two fixed-axis pulleys 26, one of which is driven by a motor.

The carriage 23 also supports a further rotating roller 27 with a transverse axis upon which the belt 11 is wound at least partially. A third rotating roller 28, upon which the belt 11 is at least partially wound, has a fixed axis. The roller 28, which is supported directly by the fixed frame 18, is driven by a motor and advances the belt 11.

The belt 11 is wound around the final end roller 22 in a first direction of rotation (clockwise in the figures). Subsequently, it is wound around the second rotating roller 27 in an opposite direction of rotation to the first (anti-clockwise in the figures), and is then wound around the third rotating roller 28 in the first direction of rotation (clockwise).

The downstream portion 32 of the base 30 is also solidly constrained to the carriage 23 and moves with it. In particular, the rods of the portion 32 are attached, via the downstream ends, to a crossbar 29 of the carriage 23, while the other end and the intermediate portions of the rods slide restingly on fixed crossbars 35 which are solidly constrained to the support frame 18 of the conveyor 10.

As the carriage 23, and with it the end roller 22, move in the opposite direction to the direction of advancement of the transport branch 12, the length of the branch 12 diminishes, the final tract 13 continuously becoming shorter until the branch 12 disappears completely (passage from the position in figure 4A to the position in figure 4B). During this displacement along the tract 13, the support which the belt 11 and the portion 32 of the rigid base 30 provide to the objects of the group N is removed. The belt 11 gradually moves downwardly away and the portion 32 slides backwards.

In operation, one group of objects M is advanced at a time by the conveyor 10 until it reaches the final tract 13 (station T).

In detail, in the embodiment shown in the figures, the objects M, coming from the conveyor 19 and then placed on the conveyor 10, initially accumulate at the first station F, forming a group N. Then, when the stops 15 are lifted, the group N is made to advance to the second station G (if present).

Finally, the group N is made to advance to the final station T, where it is inserted inside the head 40 which is arranged above the final tract 13 with its support plane 41 in the rest position, arranged laterally with respect to the group of objects, in particular arranged along the vertical surface 40a downstream of the head (see figure 4A). During this stage, the upstream barrier 51 is raised from the belt 11 in order to enable the group N to pass inside the head 40 and up to the downstream barrier 51, after which the upstream barrier 51 is lowered, positioning itself to the rear of the group N:
The head 40 is brought above the final tract 13 with a descending vertical movement or with a horizontal movement. This movement can be performed before, during or after the transfer of the group N to the final tract 13.

Subsequently, in the invention, the end 13a of the final tract 13 is shifted in a horizontal direction between an advanced position, in which the final tract 13 defines the rest surface for the group of objects M, and a retracted position in which the rest surface has disappeared.

In particular, by moving the carriage 23, the final end roller 22 is shifted backwards (in the opposite direction to the direction of advancement of the branch 12) thus shortening the length of the final tract 13 until it disappears completely.

Contemporaneously and synchronously with the shift of the end 13a of the final tract 13, the forward end 43 of the support plane 41 is shifted in order to bring the plane 41 below the layer N of objects.

During this movement, the forward end 43 of the support plane is positioned adjacently to, and on the same horizontal plane as the end 13a of the final tract 13. Therefore as the final tract 13, which is gradually growing shorter, withdraws from under the objects M, it is immediately replaced by the support plane 41, the rest surface of which is arranged in the same horizontal plane as the rest surface of the tract 13.

During the contemporaneous and synchronous movement of the two ends 13a and 43, the group of objects N is kept stationary with respect to the handling head 40 by the action of the vice means 50. Contemporaneously, the handling head 40 is kept stationary with respect to the conveyor 10 during the contemporaneous and synchronous movement of the two ends 13a and 43. The described transfer of the group of objects N is preferably performed while maintaining the belt 11 in uninterrupted continuous and uniform motion, sliding below the group which is held stationary by the vice means 50. Providing uninterrupted motion avoids continual stops and accelerations and makes operation of the conveyor 10 more fluid and rapid.

On completion of the above-described stage, the group of objects N has been transferred from resting on the final tract 13 to resting on the support plane 41 of the head 40, without the group of objects N having been moved.

The head 40 is then moved away in order to convey the objects to the subsequent operational stages and the carriage 23 is brought back to the advanced position, in such a way that the transport branch 12 returns to its maximum length, a subsequent group N of objects then being placed on the final tract 13.

As an alternative to continuous motion, motion with stops of the belt 11 can be provided. In this case, the belt 11 halts as soon as the group N has been advanced to the final station T and the handling head 40 is brought over the final tract 13, the support plane 41 being in a rest position, positioned laterally with respect to the group of objects, in particular positioned along the downstream vertical surface 40a of the head (see figure 4A). Typically the head 40 is moved with descending vertical motion, over the group N of objects, the lower horizontal surface of the head being completely open.

The subsequent transfer stages of the group N to the head 40 take place in the described way, while advancement of the belt 11 is interrupted.

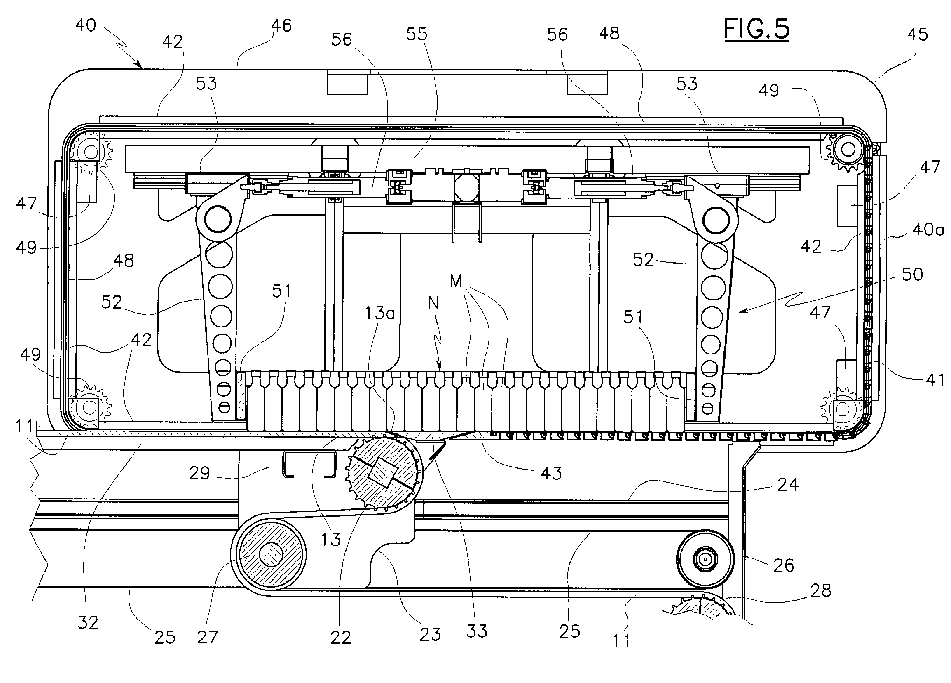

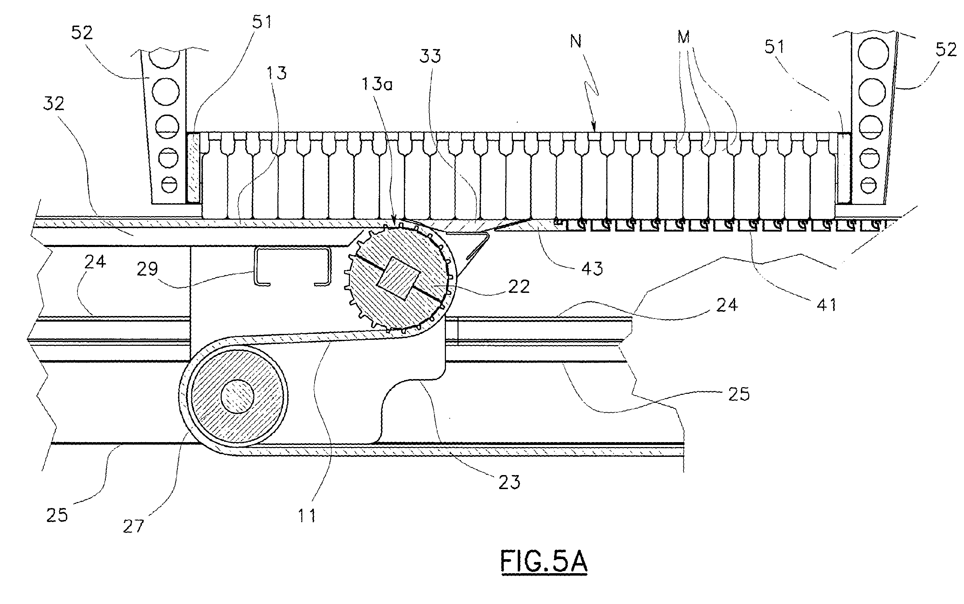

Advantageously, at the end 13a of the final tract 13, the mobile carriage 23 bears a transverse element 33 exhibiting an upper rest surface for the objects, which functions as a connecting element between the end 13a of the final tract 13 and the forward end 43 of the mobile support plane 41, in such a way as substantially to eliminate any discontinuity when the two ends 13a and 43 move adjacently to each other to transfer the group of objects N from resting on the belt 11 to resting on the mobile plane 41. In particular, in section view the element 33 exhibits two opposite pointed ends, one of which joins with the arched part of the end 13a of the belt above the roller 22, and the other of which joins with the end 43 of the support plane 41 (see figure 5A).

Thanks to the invention, the group N is transferred while the handling head is stationary. This enables any two-axis (horizontal and vertical, or rotating and vertical) handling system to be adopted for the head 40, without causing any lay-out limitations for the palletising plant.

Further, the passage of the objects from resting on the final tract 13 to resting on the support plane 41 takes place smoothly without significant jerks or jolts, thus making handling of the objects rapid and safe even when the objects are particularly unstable.

## Claims

1. An apparatus for handling groups of objects in a plant for palletising objects, comprising:
a belt conveyor (10), a transport branch (12) of which exhibits at the downstream end thereof a final tract (13) defining a rest surface for supporting a group (N) of objects at a transfer station (T); a handling head (40) exhibiting a flexible support plane (41), the support plane (41) being adapted to slide horizontally, along sliding guides (42), below the group (N) of objects at the transfer station (T) until it forms a support surface for the group of objects, the forward end (43) of the support plane being positioned adjacent to the end (13a) of the final tract (13) **characterised in that** an end (13a) of the final tract (13) is mobile in a longitudinal direction between an advanced position, in which the final tract (13) constitutes a rest surface for the group (N) of objects, and a retracted position in which the final tract (13) does not constitute a rest surface for the group of objects, the end (13a) being adapted to shift from the advanced position to the retracted position contemporaneously and synchronously with advancement of the support plane (41) below the group of objects.

2. The apparatus of claim 1, **characterised in that** a downstream end of the transport branch (12) comprises a rotating roller (22) for winding the belt, the roller (22) being supported by a carriage (23) which is mobile to and fro in a direction of advancement of the belt transporter, the end (13a) of the final tract (13) being defined at the rotating roller (22).

3. The apparatus of claim 2, **characterised in that** it comprises a second rotating roller (27) for winding the belt, the roller (27) being supported by the mobile carriage (23), and a third rotating roller (28) for winding the belt and exhibiting a fixed axis, the belt (11) of the belt conveyor (10) being wound around the first roller (22) in a first direction of rotation, and subsequently wound around the second roller (27) in an opposite direction of rotation to the previous direction of rotation, and subsequently wound around the third roller (28) in the first direction of rotation.

4. The apparatus of claim 2, **characterised in that** it comprises a downstream portion (32) of a rigid base (30) which extends along the entire tract (13) below the belt (11), stiffening the rest surface which the tract (13) defines, the portion (32) being solidly attached to the mobile carriage (23).

5. A method of handling groups of objects in a plant for palletising objects, which plant exhibits equipment comprising:
a belt conveyor (10), the transport branch (12) of which exhibits at the downstream end thereof a final tract (13) which defines a rest surface to support a group (N) of objects at a transfer station (T), the end (13a) of the final tract (13) being mobile in a longitudinal direction, a handling head (40) exhibiting a flexible support plane (41), the support plane (41) being adapted to slide horizontally, along sliding guides (42), below the group (N) of objects at the transfer station (T) until it forms a support surface for the group of objects, the method comprising the following stages:
bringing the handling head (40) over the final tract (13), the support plane (41) being positioned laterally with respect to the group of objects;
advancing a group (N) of objects on the conveyor (10) until the final tract (13) is reached;
moving the end (13a) of the final tract (13) in a longitudinal direction between an advanced position in which the final tract (13) defines the entire rest surface for the group of objects, and a retracted position in which the rest surface disappears;
moving the support plane contemporaneously and synchronously with the motion of the end of the final tract (13) until the support plane (41) is brought below the layer of objects, during which motion the forward end (43) of the support plane (41) is positioned adjacent to, and on the same horizontal plane as the end (13a) of the final tract (13).

6. The method of claim 5, **characterised in that** the handling head (40) is stationary during the contemporaneous and synchronous motion of the two ends (13a and 43).

7. The method of claim 5, **characterised in that** the group of objects is held stationary with respect to the handling head (40) during the contemporaneous and synchronous motion of the two ends (13a and 43).

## Patentansprüche

1. Vorrichtung zum Handhaben von Gruppen von Objekten in einer Anlage zum Palettieren von Objekten, Folgendes umfassend:
einen Bandförderer (10), von dem ein Transportteil (12) an seinem nachgelagerten Ende einen Endtrakt (13) aufweist, der an einer Überführungsstation (T) eine Auflagefläche zum Tragen einer Gruppe (N) von Objekten definiert,
einen Handhabungskopf (40), der eine flexible Trageebene (41) aufweist, wobei die Trageebene (41) dafür eingerichtet ist, an der Überführungsstation (T) horizontal an Gleitführungen (42) entlang unter die Gruppe (N) von Objekten zu gleiten, bis sie für die Gruppe von Objekten eine Tragefläche bildet, wobei das vordere Ende (43) der Trageebene angrenzend an ein Ende (13a) des Endtrakts (13) angeordnet ist,
**dadurch gekennzeichnet, dass** das Ende (13a) des Endtrakts (13) in Längsrichtung zwischen einer vorgerückten Position, in der der Endtrakt (13) eine Auflagefläche für die Gruppe (N) von Objekten bildet, und einer zurückgezogenen Position, in der der Endtrakt (13) keine Auflagefläche für die Gruppe von Objekten bildet, beweglich ist, wobei das Ende (13a) dafür eingerichtet ist, sich gleichzeitig und synchron mit dem Vorrücken der Trageebene (41) unter die Gruppe von Objekten von der vorgerückten Position in die zurückgezogene Position zu verlagern.

2. Vorrichtung nach Anspruch 1, **dadurch gekennzeichnet, dass** ein nachgelagertes Ende des Transportteils (12) eine sich drehende Rolle (22) zum Fördern des Bandes umfasst, wobei die Rolle (22) von einem Fahrgestell (23) getragen wird, das in einer Richtung des Vorrückens des Bandförderers hin und her beweglich ist, wobei das Ende (13a) des Endtrakts (13) an der sich drehenden Rolle (22) definiert ist.

3. Vorrichtung nach Anspruch 2, **dadurch gekennzeichnet, dass** sie eine zweite sich drehende Rolle (27) zum Fördern des Bandes umfasst, wobei die Rolle (27) vom beweglichen Fahrgestell (27) getragen wird, und eine dritte sich drehende Rolle (28) zum Fördern des Bandes, die eine ortsfest Achse aufweist, wobei das Band (11) des Bandförderers (10) um die erste Rolle (22) in eine erste Drehrichtung befördert wird und nachfolgend um die zweite Rolle (27) in eine zur vorherigen Drehrichtung entgegengesetzte Drehrichtung befördert wird und nachfolgend um die dritte Rolle (28) in die erste Drehrichtung befördert wird.

4. Vorrichtung nach Anspruch 2, **dadurch gekennzeichnet, dass** sie einen nachgelagerten Abschnitt (32) einer starren Basis (30) umfasst, der sich entlang des gesamten Trakts (13) unter dem Band (11) erstreckt und die Auflagefläche versteift, welche der Trakt (13) definiert, wobei der Abschnitt (32) fest am beweglichen Fahrgestell (23) angebracht ist.

5. Verfahren zum Handhaben von Gruppen von Objekten in einer Anlage zum Palettieren von Objekten, wobei die Anlage eine Ausrüstung aufweist, die Folgendes umfasst:
einen Bandförderer (10), von dem ein Transportteil (12) an seinem nachgelagerten Ende einen Endtrakt (13) aufweist, der an einer Überfiihrungsstation (T) eine Auflagefläche zum Tragen einer Gruppe (N) von Objekten definiert, wobei das Ende (13a) des Endtrakts (13) in eine Längsrichtung beweglich ist, einen Handhabungskopf (40), der eine flexible Trageebene (41) aufweist, wobei die Trageebene (41) dafür eingerichtet ist, an der Überführungsstation (T) horizontal an Gleitführungen (42) entlang unter die Gruppe (N) von Objekten zu gleiten, bis sie für die Gruppe von Objekten eine Tragefläche bildet, wobei das Verfahren die folgenden Abschnitte umfasst:
Bringen des Handhabungskopfes (40) über den Endtrakt (13), wobei die Trageebene (41) in Bezug zur Gruppe von Objekten seitlich angeordnet wird,
Vorrücken einer Gruppe (N) von Objekten auf dem Förderer (10) bis der Endtrakt (13) erreicht wird,
Bewegen des Endes (13a) des Endtrakts (13) in eine Längsrichtung zwischen einer vorgerückten Position, in der der Endtrakt (13) die gesamte Auflagefläche für die Gruppe (N) von Objekten bildet, und einer zurückgezogenen Position, in der die Auflagefläche zurückweicht,
Bewegen der Trageebene gleichzeitig und synchron mit der Bewegung des Endes des Endtrakts (13), bis die Trageebene (41) unter die Schicht von Objekten gebracht wird, wobei während dieser Bewegung das vordere Ende (43) der Trageebene (41) angrenzend an und auf der gleichen horizontalen Ebene angeordnet wird wie das Ende (13a) des Endtrakts (13).

6. Verfahren nach Anspruch 5, **dadurch gekennzeichnet, dass** der Handhabungskopf (40) während der gleichzeitigen und synchronen Bewegung der zwei Enden (13a und 43) stationär ist.

7. Verfahren nach Anspruch 5, **dadurch gekennzeichnet, dass** die Gruppe von Objekten während der gleichzeitigen und synchronen Bewegung der zwei Enden (13a und 43) in Bezug zum Handhabungskopf (40) stationär gehalten wird.

## Revendications

1. Appareil de manutention de groupes d'objets dans une installation de mise sur palettes d'objets, comprenant :
un convoyeur à bande (10), dont une branche de transport (12) comporte à son extrémité aval une section finale (13) qui définit une surface d'appui pour supporter un groupe (N) d'objets à une station de transfert (T) ;
une tête de manutention (40) comportant un plan de support flexible (41), le plan de support (41) étant adapté pour glisser horizontalement le long de guides coulissants (42) sous le groupe (N) d'objets à la station de transfert (T) jusqu'à former une surface de support pour le groupe d'objets, l'extrémité avant (43) du plan de support étant positionnée de manière adjacente à l'extrémité (13a) de la section finale (13),
**caractérisé en ce qu'**une extrémité (13a) de la section finale (13) est mobile en direction longitudinale entre une position avancée, dans laquelle la section finale (13) constitue une surface d'appui pour le groupe (N) d'objets, et une position rétractée, dans laquelle la section finale (13) ne constitue pas une surface d'appui pour le groupe d'objets, l'extrémité (13a) étant adaptée pour passer de la position avancée à la position rétractée de manière simultanée et synchrone avec l'avancement du plan de support (41) sous le groupe d'objets.

2. Appareil selon la revendication 1, **caractérisé en ce que** l'extrémité aval de la branche de transport (12) comprend un rouleau rotatif (22) pour enrouler la bande, le rouleau (22) étant supporté par un chariot (23) qui est mobile dans les deux sens selon une direction d'avancement du convoyeur à bande, l'extrémité (13a) de la section finale (13) étant définie par le rouleau rotatif (22).

3. Appareil selon la revendication 2, **caractérisé en ce qu'**il comprend un second rouleau rotatif (27) pour enrouler la bande, le rouleau (27) étant supporté par le chariot mobile (23), et un troisième rouleau rotatif (28) pour enrouler la bande et comportant un axe fixe, la bande (11) du convoyeur à bande (10) étant enroulée autour du premier rouleau (22) dans une première direction de rotation, puis enroulée autour du second rouleau (27) dans une direction de rotation opposée à la direction de rotation précédente, et enroulée ensuite autour d'un troisième rouleau (28) dans la première direction de rotation.

4. Appareil selon la revendication 2, **caractérisé en ce qu'**il comprend une partie aval (32) d'une base rigide (30) qui s'étend le long de l'entièreté de la section (13) sous la bande (11), raidissant ainsi la surface d'appui définie par la section (13), la partie (32) étant solidement attachée au chariot mobile (23).

5. Procédé de manutention de groupes d'objets dans une installation de mise sur palettes d'objets, l'installation comportant un équipement qui comprend :
un convoyeur à bande (10), dont la branche de transport (12) comporte à son extrémité aval une section finale (13) qui définit une surface d'appui pour supporter un groupe (N) d'objets à une station de transfert (T), l'extrémité (13a) de la section finale (13) étant mobile en direction longitudinale, une tête de manutention (40) comportant un plan de support flexible (41), le plan de support (41) étant adapté pour glisser horizontalement le long de guides coulissants (42) sous le groupe (N) d'objets à la station de transfert (T) jusqu'à former une surface de support pour le groupe d'objets, le procédé comprenant les étapes suivantes :
amener la tête de manutention (40) au-dessus de la section finale (13), le plan de support (41) étant positionné latéralement par rapport au groupe d'objets ;
avancer un groupe (N) d'objets sur le convoyeur (10) jusqu'à ce que la section finale (13) soit atteinte ;
déplacer l'extrémité (13a) de la section finale (13) dans une direction longitudinale entre une position avancée dans laquelle la section finale (13) définit l'entièreté de la surface d'appui pour le groupe d'objets, et une position rétractée dans laquelle la surface d'appui disparaît ;
déplacer le plan de support de manière simultanée et synchrone avec le déplacement de l'extrémité de la section finale (13) jusqu'à ce que le plan de support (41) soit amené sous la couche d'objets, l'extrémité avant (43) du plan de support (41) étant positionnée de manière adjacente à l'extrémité (13a) de la section finale (13) et sur le même plan horizontal que celle-ci durant ledit déplacement.

6. Procédé selon la revendication 5, **caractérisé en ce que** la tête de manutention (40) reste stationnaire durant le déplacement simultané et synchrone des deux extrémités (13a et 43).

7. Procédé selon la revendication 5, **caractérisé en ce que** le groupe d'objets est maintenu stationnaire par rapport à la tête de manutention (40) durant le déplacement simultané et synchrone des deux extrémités (13a et 43).
